# EUROPÄISCHE PATENTANMELDUNG

(11) **EP 0 623 712 A2**
(43) Veröffentlichungstag der Anmeldung: **09.11.1994**
(21) Anmeldenummer: 94106638.3
(22) Anmeldetag: 28.04.1994
(51) Int. Cl.: E03F 5/14

(54) **Vorrichtung zum Entfernen von Abscheidegut aus einer Flüssigkeit**

(30) Priorität: 04.05.1993 DE 4314673
(71) Anmelder: Hans Huber GmbH Maschinen- und Anlagenbau, D-92334 Berching (DE)
(72) Erfinder: Fischer, Reinhold, D-92342 Forchheim (DE); Huber, Hans Georg, D-92334 Berching (DE)
(74) Vertreter: Rehberg, Elmar, Dipl.-Ing.

(57) **Zusammenfassung**

Eine Vorrichtung zum Entfernen von Abscheidegut aus einer Flüssigkeit weist eine schräggestellte, flüssigkeitsdurchlässige und umlaufend angetriebene Abscheidefläche 1 auf, die anströmseitig eine offene Stirnfläche 5 und abströmseitig eine vorzugsweise geschlossene Stirnfläche 4 aufweist. Es ist eine Schneckenfördereinrichtung 19 parallel zur Abscheidefläche 1 angeordnet, die zu einer Abwurfstelle für das Abscheidegut führt und einen Einwurftrichter 23, ein Gehäuse 18, eine Welle 21 und eine Förderwendel 22 aufweist. Es ist eine Ablöseeinrichtung 32 über dem Einwurftrichter 23 angeordnet.

Die Achse 20 der Schneckenfördereinrichtung 19 ist oberhalb abständig zu der Achse 2 der umlaufend angetriebenen Abscheidefläche 1 und vorzugsweise zumindest etwa parallel dazu versetzt angeordnet.

## Beschreibung

Die Erfindung betrifft eine Vorrichtung zum Entfernen von Abscheidegut aus einer Flüssigkeit, mit einer schräggestellten, flüssigkeitsdurchlässigen und umlaufend angetriebenen Abscheidefläche, die anströmseitig eine offene und abströmseitig eine vorzugsweise geschlossene Stirnfläche aufweist, mit einer parallel zur Abscheidefläche angeordneten, zu einer Abwurfstelle für das Abscheidegut führenden, als Schneckenfördereinrichtung mit Einwurftrichter, Gehäuse, Welle und Förderwendel ausgebildeten Förderstrecke für das Abscheidegut, und mit einer über dem Einwurftrichter angeordneten Ablöseeinrichtung für das Abscheidegut von der Abscheidefläche. Die Vorrichtung dient insbesondere zum Entfernen von Schwimm- und/oder Schwebegut aus Gerinnen von Kläranlagen, kann jedoch auch in anderen Bereichen, beispielsweise in der Textilindustrie, in Schlachthöfen, Geflügelfarmen usw. verwendet werden.

Eine Vorrichtung der eingangs beschriebenen Art ist aus der DE-PS 36 30 755 bekannt. Dort ist die Abscheidefläche zylindermantelförmig ausgebildet und weist einen umlaufend angetriebenen Fangrost auf, der aus einer Vielzahl von Ringscheiben besteht, die über den Umfang durchgehend mit Abstand zueinander schlitzbildend angeordnet sind. Als Ahlöseeinrichtung ist ein Räumabstreifer vorgesehen, der in die Schlitze zwischen den Ringscheiben zumindest teilweise eingreift. Die als Schneckenfördereinrichtung mit Einwurftrichter, Gehäuse, Welle und Förderwendel ausgebildete Förderstrecke für das Abscheidegut ist in der Mitte der Abscheidefläche, also mit ihrer Achse koaxial zu der Achse der zylindermantelförmigen Abscheidefläche angeordnet. Die Vorrichtung besitzt zwei Antriebe, nämlich einen ersten für die Schneckenfördereinrichtung und einen zweiten für die Abscheidefläche. Bei dieser bekannten Vorrichtung ist die Einstauhöhe durch die Anordnung der Stirnwand des Einwurftrichters begrenzt, d. h. der vor der Abscheidefläche aufgestaute Wasserspiegel darf nicht höher liegen oder steigen als die Oberkante der Stirnwand des Einwurftrichters, damit bereits abgeschiedenes und in den Einwurftrichter eingeworfenes Abscheidegut nicht durch die Flüssigkeit aus dem Einwurftrichter ausgeschwemmt wird. Durch den axialen Versatz des Einwurftrichters nach unten wird zwar sichergestellt, daß sämtliches Abscheidegut, welches von der Ablöseeinrichtung gelöst und in den Einwurftrichter abgeworfen wird, auch in diesen gelangt, jedoch wird dadurch gleichzeitig die zulässige Einstauhöhe nochmals verringert. Weiterhin ist nachteilig, daß durch diese Begrenzung der Einstauhöhe die Abscheidefläche im oberen Bereich nur teilweise genutzt werden kann. Insoweit kann auch eine Vergrößerung der effektiv nutzbaren Abscheidefläche bei einer solchen Vorrichtung nicht dadurch erreicht werden, daß die Abscheidefläche parallel zu ihrer Achse verlängert wird. Zwar ist es möglich, den Winkel der Schrägstellung der Achse der Vorrichtung zur Horizontalebene zu verkleinern, um dadurch weitere Flächenbereiche der Abscheidefläche effektiv zu Abscheidezwecken nutzen zu können, jedoch verlängert sich dadurch in nachteiliger Weise die Baulänge der Vorrichtung, wenn das Abscheidegut auf eine bestimmte Niveauhöhe angehoben werden muß.

Eine ähnliche Vorrichtung ist auch aus der DE-PS 34 20 157 bekannt. Dabei ist ein gemeinsamer Antrieb für die Schneckenfördereinrichtung und für die Abscheidefläche vorgesehen, wobei der Antrieb auf die Abscheidefläche vermittels eines Antriebsarmes übertragen wird, der die Abscheidefläche mit der Welle der Schneckenfördereinrichtung verbindet. Insoweit liegt auch hier die koaxiale Anordnung der Achsen der Schneckenfördereinrichtung einerseits und der Abscheidefläche andererseits vor.

Insbesondere bei kommunalen Kläranlagen besteht die Notwendigkeit, an eine bestehende Kläranlage mit ihrem Zulaufgerinne zusätzlich Neubaugebiete anzuschließen, so daß sich bei konstanter Gerinnebreite ein steigender Wasserstand ergibt. Die maximale Einstauhöhe der bekannten Vorrichtungen ist jedoch begrenzt, so daß ein darüber hinausgehender Anwendungsfall den Umbau des Gerinnes mit einer größeren Breite und den Austausch der bekannten Vorrichtung gegen eine solche mit einem entsprechend größeren Durchmesser erfordern. Auch eine Parallelanordnung eines zusätzlichen Gerinnezweiges mit einer weiteren Vorrichtung könnte hier Abhilfe schaffen, sofern dies die baulichen Gegebenheiten zulassen.

Aus dieser Problematik ergibt sich die Aufgabe der Erfindung, die effektiv nutzbare Abscheidefläche bei einer Vorrichtung der eingangs beschriebenen Art zu vergrößern, ohne gleichzeitig den Durchmesser und damit die Gerinnebreite mitverändern zu müssen.

Erfindungsgemäß wird dies bei einer Vorrichtung der eingangs beschriebenen Art dadurch erreicht, daß die Achse der Schneckenfördereinrichtung oberhalb abständig zu der Achse der umlaufend angetriebenen Abscheidefläche und vorzugsweise zumindest etwa parallel dazu versetzt angeordnet ist.

Die Erfindung geht damit von dem Gedanken aus, die Achse der Schneckenfördereinrichtung von der Achse der umlaufend angetriebenen Abscheidefläche zu lösen und in einem Bereich oberhalb der Achse der Abscheidefläche anzuordnen. Dabei muß die Achse der Schneckenfördereinrichtung nicht unbedingt senkrecht oberhalb der Achse der Abscheidefläche verlaufen, und es ist auch nicht unbedingt zwingend erforderlich, die Parallelität der Achsen zu wahren. Die Anordnung kann vielmehr auch beispielsweise so getroffen sein, daß die Achse der Schneckenfördereinrichtung innerhalb eines etwa z. B. halbkreisförmigen Flächenbereiches oberhalb einer durch die Achse der Abscheidefläche verlaufenden Ebene angeordnet ist. Es erscheint sogar sinnvoll, die Achse der Schneckenfördereinrichtung etwas in Richtung auf den beim Umlauf der Abscheidefläche aufsteigenden Teil hin versetzt anzuordnen. Bei einer parallelen Anordnung der beiden Achsen kann z. B. auch der Einwurftrichter der Schneckenfördereinrichtung mit über seine Länge konstant ausgebildeten Seitenwandungen versehen sein. Wenn die parallele Anordnung etwas verlassen wird, so kann dies so durchgeführt werden, daß die Seitenwandung des Einwurftrichters in Förderrichtung etwas zunimmt, womit einerseits der zunehmenden Menge des Abscheidegutes im Einwurftrichter Rechnung getragen wird und letztlich die dem eingestauten Wasser zugekehrte Stirnwand des Einwurftrichters mit ihrer oberen Kante besonders weit angehoben wird, so daß damit die zulässige Einstauhöhe besonders weit angehoben wird, wodurch andererseits zusätzliche Bereiche der Abscheidefläche effektiv nutzbar werden, also von dem Wasser durchströmt werden können.

Ein wesentlicher Vorteil der neuen Vorrichtung ist darin zu sehen, daß sie ohne Veränderung der Gerinnebreite und des Durchmessers der Abscheidefläche eine Vergrößerung der Einstauhöhe zuläßt. Mit dieser Möglichkeit einer vergrößerten Einstauhöhe ist zugleich der weitere Vorteil verbunden, daß die Abscheidefläche auch axial vergleichsweise länger ausgebildet werden kann und auch dadurch weitere Flächenbereiche zusätzlich zu Abscheidezwecken genutzt werden können.

Durch das Verlassen der Koaxialität wird es zwar in der Regel erforderlich werden, zwei voneinander getrennte Antriebe zu nutzen. Dies muß jedoch nicht nachteilig sein, weil es bei zwei voneinander getrennten Antrieben vorteilhaft möglich ist, unterschiedliche Drehzahlen und Geschwindigkeiten anzuwenden, die einerseits auf die Besonderheiten der Abscheidefläche und andererseits auf die gewünschten Eigenschaften der Schneckenfördereinrichtung abstimmbar sind.

Die Abscheidefläche kann auf dem Gehäuse der Schneckenfördereinrichtung drehbar gelagert sein. Das Gehäuse der Schneckenfördereinrichtung ist ohnehin stillstehend angeordnet und steht damit für Lager- und Abstützzwecke zur Verfügung. Die Abstützung und Lagerung erfolgt mindestens im Bereich der geschlossenen Stirnwand der Abscheidefläche, kann aber auch den Bereich der offenen Stirnwand der Abscheidefläche umfassen.

Die Abscheidefläche kann zylindermantelförmige, unrunde oder nach oben gestreckte ovale Gestalt aufweisen. In all diesen Fällen ist es möglich, die Achse der Schneckenfördereinrichtung einerseits und die Achse der Abscheidefläche andererseits unabhängig voneinander anzuordnen. Eine zylindermantelförmige Abscheidefläche findet dann Anwendung, wenn die Abscheidefläche selbst weitgehend starr ausgebildet ist, wie dies bei einem Korb aus gerolltem Flacheisen oder aus keilförmigen Stäben der Fall ist. Die zylindermantelförmige Abscheidefläche kann auch als Siebkorb, als Korb aus Filtermaterial o. dgl. ausgebildet sein. Sofern die Abscheidefläche aus gegeneinander beweglichen Gliedern ausgebildet ist, kommt auch eine unrunde Gestalt, z. B. in Sechseckform, in Betracht. Auch ovale gestreckte Gestaltungen sind möglich, die dann hochkant schrägstehend angeordnet werden, um die zulässige Einstauhöhe und die effektiv nutzbare Abscheidefläche zu vergrößern.

Die Ablöseeinrichtung, die mit der umlaufend angetriebenen Abscheidefläche in Wirkverbindung tritt, kann als Bürste, Düsenleiste mit Wasser, Dampf, Druckluft, als ortsfester Abstreifer o. dgl. ausgebildet sein. Die Ablösung kann auch durch Vibration erfolgen. Sie befindet sich zwar in der Regel auf der Außenseite der Abscheidefläche, jedoch in Zuordnung an einem Ort relativ zum Einwurftrichter der versetzten Schneckenfördereinrichtung.

Für die Lagerung der Abscheidefläche an dem Gehäuse der Schneckenfördereinrichtung können verschiedene Maßnahmen herangezogen werden. Die Abscheidefläche kann im Bereich der Stirnwand auf mindestens drei Abstützarmen gelagert sein, die mit Rollen besetzt sind und entsprechend dem axialen Versatz unterschiedliche Längen aufweisen. Die starre oder in sich bewegliche Abscheidefläche wird dann über die ortsfesten Rollen geführt, wobei sich die Abstützarme am Gehäuse der Schneckenfördereinrichtung abstützen. Durch den axialen Versatz bekommen die Abstützarme unterschiedliche Längen.

Zusätzlich ist es möglich, die Abscheidefläche auch im Bereich der offenen Stirnwand auf Abstützarmen zu lagern. Auch diese Abstützarme können auf dem Gehäuse der Schneckenfördereinrichtung aufbauen, an ihren freien der Abscheidefläche zugekehrten Enden mit Rollen versehen sein und insoweit eine zweiten Lagerung für die Abscheidefläche bilden.

Die Abscheidefläche kann ein Längen/Durchmesserverhältnis im Bereich von etwa 1 : 1 bis 2 : 1 aufweisen. Während bisher bei den bekannten Vorrichtungen ein Längen/Durchmesserverhältnis von etwa 1 : 1 Anwendung fand, läßt die neue Anordnung bei konstantem Einbauwinkel der Schräglage der Achse der Abscheidefläche eine Steigerung des Längen/Durchmesserverhältnisses bis etwa 2 : 1 zu. Dies bedeutet, daß die Abscheidefläche vergleichsweise erheblich länger gebaut werden kann, wodurch die effektiv nutzbaren Flächenbereiche der Abscheidefläche vergrößert werden.

Die Abscheidefläche selbst kann als Siebkorb, als Fangrost, als Gliederkettenrechen mit Förderhaken o. dgl. ausgebildet sein. Ein entsprechender Siebkorb kann auch aus Filtermaterial, insbesondere Keramikmaterial, ausgebildet werden.

Für die Schneckenfördereinrichtung einerseits und die Abscheidefläche andererseits können getrennte Antriebe vorgesehen sein, so daß vorteilhaft die Möglichkeit besteht, unterschiedliche angepaßte Drehzahlen und Geschwindigkeiten an der Abscheidefläche einerseits und an der Schneckenfördereinrichtung andererseits zu verwirklichen.

Auch der Antrieb für die Abscheidefläche kann auf dem Gehäuse der Schneckenfördereinrichtung angeordnet bzw. gelagert sein, so daß eine gesonderten Lagerung entfällt.

Bevorzugte Ausführungsbeispiele der Erfindung sind in den Zeichnungen dargestellt und werden im Folgenden beschrieben. Es zeigen:
- Figur 1: eine schematisierte Vertikalschnittdarstellung der für die Erfindung wesentlichen Teile,
- Figur 2: eine Einzelheit im Bereich des Antriebes der Abscheidefläche,
- Figur 3: verschiedene Ausbildungsmöglichkeiten für die Abscheidefläche,
- Figur 4: einen Schnitt gemäß der Linie IV-IV in Figur 1,
- Figur 5: eine Ansicht in Richtung V in Figur 1,
- Figur 6: eine ähnliche Darstellung wie Figur 1, jedoch an einem weiteren Ausführungsbeispiel und
- Figur 7: einen Schnitt gemäß der Linie VII-VII in Figur 6.

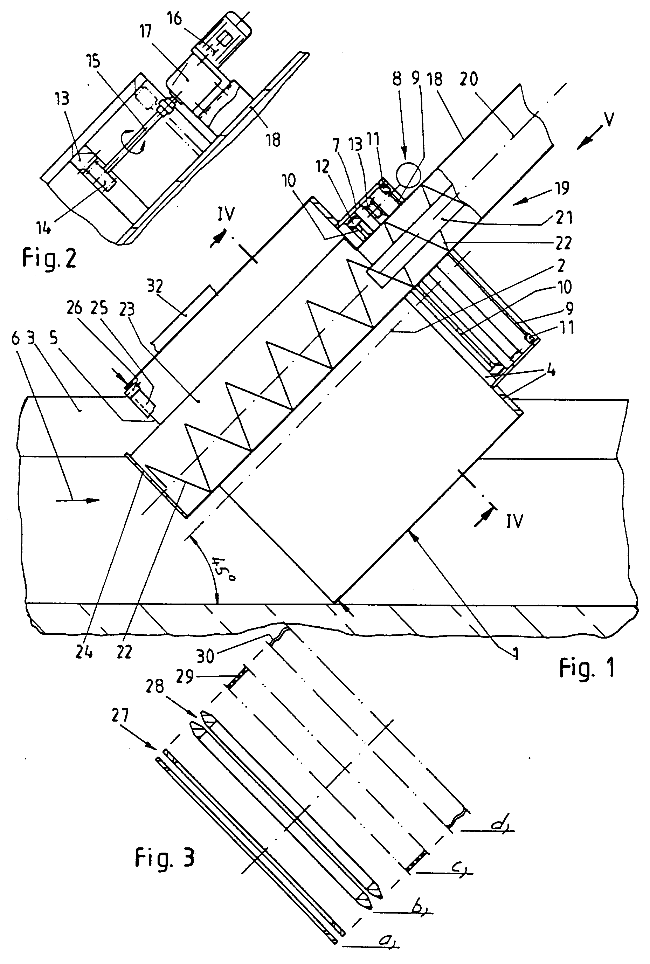

Die Vorrichtung gemäß Figur 1 weist eine zylindermantelförmig ausgebildete Abscheidefläche 1 auf, die als umlaufender Siebkorb ausgebildet sein kann. Die Abscheidefläche 1 ist mit ihrer Achse 2 schrägstehend in einem Winkel von etwa 45° in einem Gerinne 3 angeordnet. Die Breite des Gerinnes 3 entspricht dem Durchmesser der Abscheidefläche 1. Die Abscheidefläche 1 besitzt an ihrem oberen Ende eine geschlossen ausgebildete Stirnfläche 4 und an ihrem unteren Ende eine offene Stirnfläche 5, durch die die mit Abscheidegut beladene Flüssigkeit gemäß Pfeil 6 einströmt.

Im Anschluß an die geschlossene Stirnfläche 4 weist die Abscheidefläche 1 einen Fortsatz 7 auf, der der Lagerung und des Angriffes eines Antriebes 8 dient. Es sind hier Abstützarme 9 und 10 vorgesehen, die an ihren dem Fortsatz 7 zugekehrten Enden Rollen 11 bzw. 12 tragen, auf denen der Fortsatz 7 abrollt. Innerhalb des Fortsatzes 7 ist auch ein Zahnkranz 13 angeordnet, der mit einem Ritzel 14 zusammenarbeitet (Figur 2), welches auf einer Welle 15 sitzt, die von einem Motor 16 mit Getriebe 17 angetrieben wird. Sowohl der Motor 16 mit Getriebe 17, die die wesentlichen Teile des Antriebs 8 bilden, wie auch die Abstützarme 9 und 10 sind auf einem Gehäuse 18 einer Schneckenfördereinrichtung 19 angeordnet und abgestützt.

Die Schneckenfördereinrichtung 19 weist eine Achse 20 auf, die gemäß der Ausführungsform nach Figur 1 parallel zu der Achse 2 der Abscheidefläche 1 nach oben versetzt angeordnet ist. Auch die übrigen Teile der Scheckenfördereinrichtung 19, nämlich eine Welle 21, eine Förderwendel 22 und ein Einwurftrichter 23 mit einer dem Gerinne 3 zugekehrten Stirnwand 24 sind entsprechend versetzt zu der Achse 2 der Abscheidefläche 1 vorgesehen. Die Achse 20 liegt oberhalb einer Ebene durch die Achse 2 senkrecht zur Zeichenebene. Es ist nicht unbedingt erforderlich, daß die Achse 20 senkrecht über der Achse 2 liegt. Wichtig ist, daß die Schneckenfördereinrichtung 19 mit ihrer Achse 20 nach oben versetzt zu der Achse 2 vorgesehen ist. Im Bereich des Einwurftrichters 23 ist die Förderwendel 22 wellenlos angeordnet.

Die Oberkante der Stirnwand 24 des Einwurftrichters 23 bestimmt die maximale Einstauhöhe und damit auch die Größe der effektiv durchströmbaren und damit nutzbaren Teilfläche der Abscheidefläche 1. Es ist erkennbar, daß die effektiv wirksame Teilfläche in Richtung der Achse 2 von unten nach oben abnimmt. Je höher jedoch die Einstauhöhe gestaltet werden kann, desto größer ist die effektiv nutzbare Teilfläche der Abscheidefläche 1.

Der obere Teil der Schneckenfördereinrichtung 19 ist in Figur 1 nicht dargestellt. Er kann ähnlich gestaltet sein wie im Stand der Technik. Auch ein gesonderter Antrieb für die Welle 21 und die Förderwendel 22, wie er üblicherweise im freien Endbereich des Gehäuses 18 aufgesetzt ist, ist der Übersichtlichkeit halber nicht dargestellt.

Auch im unteren Bereich der Abscheidefläche 1, also im Bereich der offenen Stirnfläche 5, können Abstützarme 25 mit Rollen 26 angeordnet sein, auf denen die zylindermantelförmige Abscheidefläche 1 abrollt. Die Abstützarme 25 sind an dem Einfülltrichter 23 abgestützt, der in das Gehäuse 18 der Schneckenfördereinrichtung 19 übergeht.

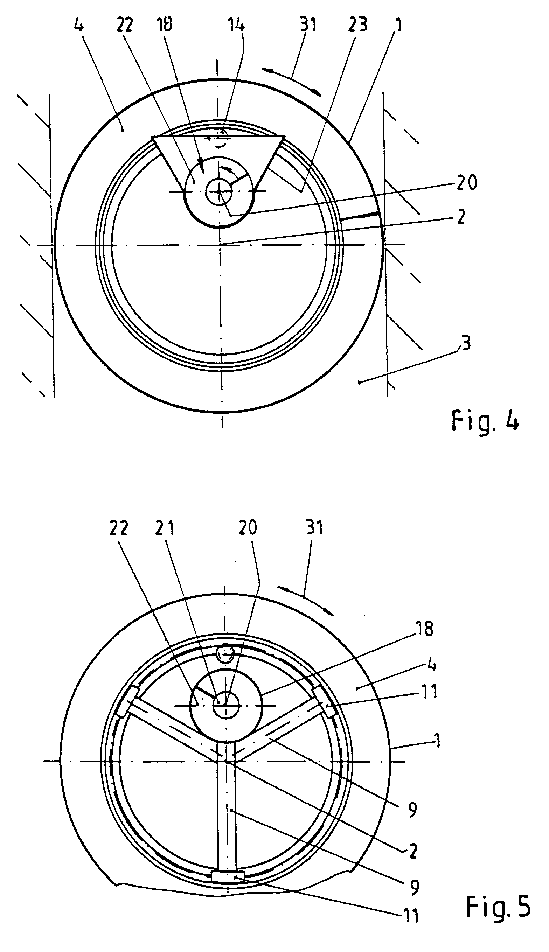

In Figur 3 sind verschiedene Ausführungsmöglichkeiten für eine zylindermantelförmige Abscheidefläche 1 dargestellt. Diese kann aus gebogenen Flachstäben 27, aus keilförmigen Stäben 28, aus Filtermaterial 29 oder aus Filterkeramik 30 bestehen bzw. ausgebildet sein.

Figur 4 läßt noch einmal genau erkennen, daß die Achse 20 nicht mehr koaxial zur Achse 2, sondern nach oben in einen halbkreisförmig begrenzten Raum hinein versetzt angeordnet ist. Die Abscheidefläche 1 wird gemäß Pfeil 31 in der einen oder anderen Drehrichtung umlaufend angetrieben, was kontinuierlich oder taktweise geschehen kann. Im oberen Bereich und stillstehend gegenüber der umlaufend angetriebenen Abscheidefläche 1 ist eine Ablöseeinrichtung 32 (Figur 1) vorgesehen. die über die Länge der Abscheidefläche 1 durchgehend vorgesehen ist und aus einer Bürste. einer Düsenleiste. aus Schwenkabstreifern o. dgl. bestehen kann. Die Ablöseeinrichtung 32 ist relativ zu dem Einwurftrichter 23 angeordnet. d. h. wenn die Schneckenfördereinrichtung 18 mit Förderwendel 22 und ihren übrigen Teilen nicht exakt vertikal über der Achse 2 angeordnet ist, sondern beispielsweise seitlich versetzt dem aufsteigenden Trum der Abscheidefläche 1 zugekehrt, dann ist auch die Ablöseeinrichtung 32 entsprechend am äußeren Umfang der Abscheidefläche 1 vorgesehen.

Aus Figur 5 ist die Anordnung der Abstützarme 9 an dem Gehäuse 18 der Schneckenfördereinrichtung mit ihrer Förderwendel 22 erkennbar.

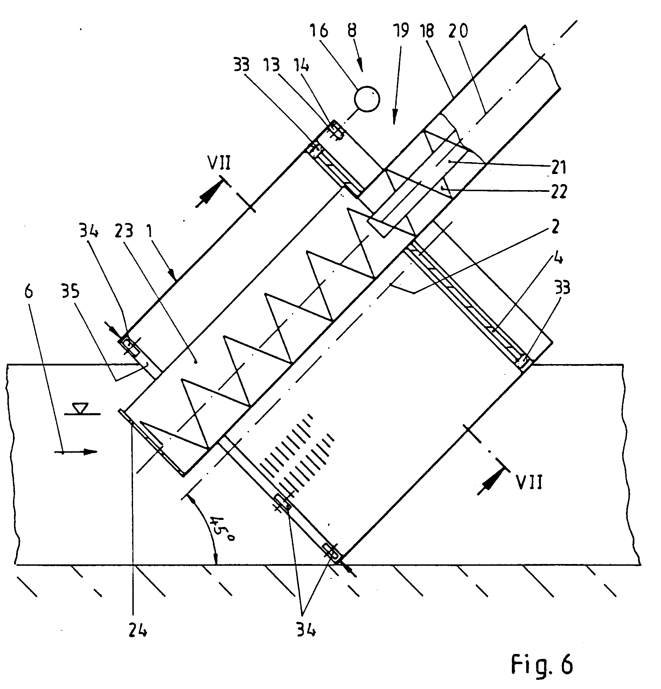

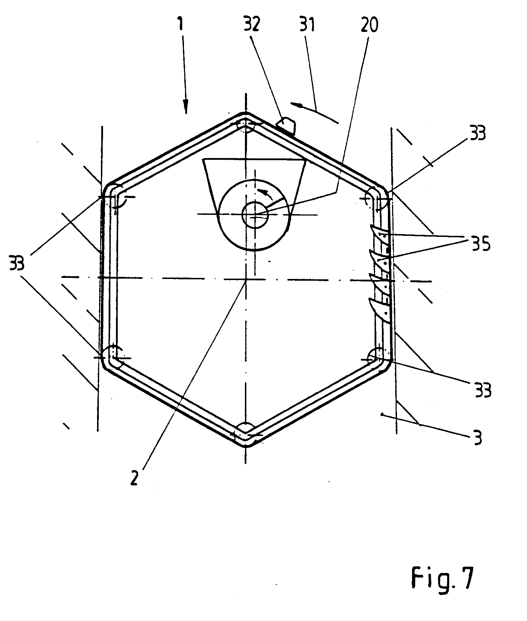

Bei der Ausführungsform gemäß den Figuren 6 und 7 ist die Abscheidefläche 1 als Gliederbandrechen ausgebildet und aus gegeneinander beweglichen Einzelteilen zusammengesetzt. Die Abscheidefläche 1 wird auch hier über den Antrieb 8 angetrieben. Es sind Rollen 33 und 34 angeordnet, so daß die Abscheidefläche 1 in Form eines Sechsecks aufgespannt und geführt wird, wie dies insbesondere aus Figur 7 erkennbar ist. Die Abscheidefläche 1 kann mit Fanghaken 35 versehen sein, die die Aufwärtsförderung des Abscheidegutes an der Innenseite der Abscheidefläche 1 begünstigen. Aus Figur 7 ist auch erkennbar, daß die Achse 20 oberhalb und seitlich der Achse 2 versetzt angeordnet sein kann. Entsprechend ist auch die Ablöseeinrichtung 32 vorgesehen.

### BEZUGSZEICHENLISTE

- 1 -: Abscheidefläche
- 2 -: Achse
- 3 -: Gerinne
- 4 -: Stirnfläche
- 5 -: Stirnfläche
- 6 -: Pfeil
- 7 -: Fortsatz
- 8 -: Antrieb
- 9 -: Abstützarm
- 10 -: Abstützarm
- 11 -: Rolle
- 12 -: Rolle
- 13 -: Zahnkranz
- 14 -: Ritzel
- 15 -: Welle
- 16 -: Motor
- 17 -: Getriebe
- 18 -: Gehäuse
- 19 -: Schneckenfördereinrichtung
- 20 -: Achse
- 21 -: Welle
- 22 -: Förderwendel
- 23 -: Einwurftrichter
- 24 -: Stirnwand
- 25 -: Abstützarm
- 26 -: Rolle
- 27 -: Flachstäbe
- 28 -: Stäbe
- 29 -: Filtermaterial
- 30 -: Filterkeramik
- 31 -: Pfeil
- 32 -: Ablöseeinrichtung
- 33 -: Rolle
- 34 -: Rolle
- 35 -: Fanghaken

## Patentansprüche

1. Vorrichtung zum Entfernen von Abscheidegut aus einer Flüssigkeit, mit einer schräggestellten, flüssigkeitsdurchlässigen und umlaufend angetriebenen Abscheidefläche (1), die anströmseitig eine offene und abströmseitig eine vorzugsweise geschlossene Stirnfläche (5, 4) aufweist, mit einer parallel zur Abscheidefläche (1) angeordneten, zu einer Abwurfstelle für das Abscheidegut führenden, als Schneckenfördereinrichtung (19) mit Einwurftrichter (23), Gehäuse (18), Welle (21) und Förderwendel (22) ausgebildeten Förderstrecke für das Abscheidegut, und mit einer über dem Einwurftrichter (23) angeordneten Ablöseeinrichtung (32) für das Abscheidegut von der Abscheidefläche (1), dadurch gekennzeichnet, daß die Achse (20) der Schneckenfördereinrichtung (19) oberhalb abständig zu der Achse (2) der umlaufend angetriebenen Abscheidefläche (1) und vorzugsweise zumindest etwa parallel dazu versetzt angeordnet ist.

2. Vorrichtung nach Anspruch 1, dadurch gekennzeichnet, daß die Abscheidefläche (1) auf dem Gehäuse (18) der Schneckenfördereinrichtung (19) drehbar gelagert ist.

3. Vorrichtung nach Anspruch 1 oder 2, dadurch gekennzeichnet, daß die Abscheidefläche (1) zylindermantelförmige, unrunde oder nach oben gestreckte ovale Gestalt aufweist.

4. Vorrichtung nach einem der Ansprüche 1 bis 3, dadurch gekennzeichnet, daß die Ablöseeinrichtung (32) als Bürste, Düsenleiste, ortsfeste Abstreifer o. dgl. ausgebildet ist.

5. Vorrichtung nach einem der Ansprüche 2 oder 3, dadurch gekennzeichnet, daß die Abscheidefläche (1) im Bereich der Stirnwand (4) auf mindestens drei Abstützarmen (9) gelagert ist, die mit Rollen (11) besetzt sind und entsprechend dem achsialen Versatz unterschiedliche Längen aufweisen.

6. Vorrichtung nach einem der Ansprüche 1 bis 5, dadurch gekennzeichnet, daß die Abscheidefläche (1) auch im Bereich der offenen Stirnwand (5) auf Abstützarmen (25) gelagert ist.

7. Vorrichtung nach einem der Ansprüche 1 bis 6, dadurch gekennzeichnet, daß die Abscheidefläche (1) ein Längen/Durchmesserverhältnis im Bereich von etwa 1:1 bis 2:1 aufweist.

8. Vorrichtung nach einem der Ansprüche 1 bis 7, dadurch gekennzeichnet, daß die Abscheidefläche (1) als Siebkorb, als Fangrost, als Gliederkettenrechen mit Förderhaken o. dgl. ausgebildet ist.

9. Vorrichtung nach einem der Ansprüche 1 bis 8, dadurch gekennzeichnet, daß für die Schneckenfördereinrichtung (19) einerseits und die Abscheidefläche (1) andererseits getrennte Antriebe vorgesehen sind.

10. Vorrichtung nach Anspruch 9, dadurch gekennzeichnet, daß der Antrieb (8) für die Abscheidefläche (1) auf dem Gehäuse (18) der Schneckenfördereinrichtung (19) angeordnet ist.
